# EUROPEAN PATENT SPECIFICATION

(11) **EP 1 594 791 B1**
(45) Date of publication and mention of the grant of the patent: **18.05.2011**
(21) Application number: 03783030.4
(22) Date of filing: 22.12.2003
(51) Int. Cl.: B66C 13/46, B65G 1/137, G06K 9/20

(54) **A CONTAINER CRANE AND A METHOD FOR CONTAINER IDENTIFICATION**
KONTAINERKRAN UND VERFAHREN ZUR IDENTIFIZIERUNG VON BEHÄLTERN
PORTIQUE ET PROCEDE D'IDENTIFICATION DE CONTENEURS

(30) Priority: 31.12.2002 SE 0203906; 17.04.2003 US 417233
(43) Date of publication of application: 16.11.2005
(73) Proprietor: ABB AB, 721 83 Västerås (SE)
(72) Inventor: HADELL, Anders, S-724 81 Västeras (SE)
(86) International application number: PCT/SE2003/002082
(87) International publication number: WO 2004/058623

(56) References cited:
- EP-A1- 1 043 262
- WO-A1-96/07929
- DE-A1- 19 630 187
- US-A- 5 142 658

## Description

### Field of the Invention

The present invention relates to a container crane and a method for automatically identification of cargo containers in a loading or unloading situation, preferable at port areas and especially for capturing and/or analyzing images of at least a part of a cargo container.

### Background of the Invention

There is an increasing commercial importance and need for systems that are capable of automatically reading and identifying of cargo containers and for keeping track of the individual containers in a container terminal or after having been loaded/unloaded to/from a ship, train or the like.

In modern terminals, the flow of containers is normally registered at the gate. All cargo or freight containers are each provided with a unique identification marking or code, ID, that must be checked and verified. The container ID is recorded by the terminal logistics in order to create a later shipping instruction for sending the container out on a ship, train or the like by using a handling apparatus such as a crane. In order to minimize mistakes and "loosing" containers, all containers also have to be assigned when and to where the container is loaded/unloaded.

For containers being loaded/unloaded to or from a ship or a train, such ID are read and handled manually by an operator and entered manually into a computer system for controlling operations in the cargo container terminal.

There are several problems with this. Both true position of storage in the ship or on the train, the sequence and the collection from trucks is frequently erroneous compared to the logistic instruction. Manual systems are also clearly inefficient as it is time consuming and errors more easily occur i.e. when data manually is entered into computer systems. If a container is lost or subject to wrong routing or just misplaced lead to unnecessary time delays for finding it, which creates unwanted and unnecessary costs.

Every container that is loaded or unloaded from a truck, between the legs or in the back reach of a quay crane, must pass the sill beam height level of the crane. The time when this is done, the size of the container passing and the exact position where the driver may pass this level is unknown. All kinds of odd moves or shuffle relocations made by the driver on ship or over quayside that do not result in a "complete job", that is transferring a container on or off the ship, may happen and the same container may pass the sill beam height level several times. It is a problem to identify or detect incomplete job moves, i.e. if a container is moved but did not result in a "job complete", i.e. the container were not completely loaded or unloaded.

Truck travel direction and final position while being loaded or unloaded is also unpredictable. Other trucks may as well be passing the truck being served by the crane and may than be blocking the side view of the container.

The container ID should always be checked when the crane finished the job and the time should be logged and related to the crane or ship/train position, linked to the container ID and returned to the terminal logistics via a printer, a data log, a network, a radio link or a display.

### Most important problems to be solved

When automating the process of identifying and keeping track of each cargo container in a loading or unloading situation there are some problems to solve.

For example all containers passing the crane when loading or unloading onto or from a ship, train or the like are not always correctly identified. It is then a problem to adequately combine each containers position after having been loaded or unloaded with its ID number and loading time, i.e. after "job complete". Another problem may be that a verifying image of the container ID and also of the whole container as such is not saved for later control.

A camera for checking the container ID must have correct view angle or zoom into a certain area of the container in order to capture images that can be analysed by an OCR system. The container passes the camera level at different distances, between i.e. 3-26 meters, from the location of the cameras which means that the cameras, quick and accurate, has to zoom in the ID area of the container or in special cases the whole container. The capturing of the images has normally also to be done on moving containers as there is no time for stops or delays in the job cycle.

### Prior art

Container handling systems that automate the information about the containers are earlier known.

Such a system is described i.e. by JP 10181885**,** which automate the transmission of the cargo work information of a container transporter from the entrance of a container terminal to the exit of the same. A data carrier holds information of the container such as its specification and identification number, the store position of it etc. The method is unspecific but includes in general a reading device arranged on a transfer crane and which reading device transmits the data to a display that can be read by the driver of the crane so the driver is informed where the container should be loaded/located. The purpose of our invention is not to transmit data to the driver of the crane but to capture an image of and analyse the container ID and link this to the information generated by the crane control system.

EP 0887120 describes a system for identifying containers handled by a container handling apparatus. Each container has an identifying pattern and a camera generates an image that is analysed. However this system is aimed at inspection of moulded containers such as glass bottles or jars in order to find defective products. The purpose and the design of this system is therefore completely different from the present invention.

EP 0862132 describes a system for recognizing an identification code such as a licensing plate and particular adapted for situations where visual disorders can occur such as that the plate may be partially covered by the frame that holds the plate or simply at least partly covered by dirt from the roads. The purpose of this invention is to improve the reliability of the analyze of the identification pattern. Our invention is focused on the image capturing process, how this is performed and our invention is also used in a different situation.

WO 96/07929, entitled An arrangement for automatically sensing the position of a transport vehicle, assigned to Siemens Aktiengesellschaft, discloses use of a camera mounted on a boom of a container crane. The camera is also arranged with different reflectors, such that it may be used to detect position of a transport vehicle respective the crane. The present invention is focused on the image capturing process, how this is performed and not to detecting a position of a container as carried on a vehicle.

### The object of the present invention

The primary object of the invention is to provide a system and a method for identification of a container, by automatically capturing and/or analyzing images of at least a part of the container that is handled by a crane, preferable at port areas, comprising at least one camera, a camera control system and a crane control system.

A system for automatically capturing and/or analyzing images of at least a part of a container that is handled by a crane, is provided by that the camera control system is arranged to receive information generated in, and/or transmitted from, the crane control system thereby controlling at least one of the functions of the camera or cameras in order to capture one or more images of at least a part of the container.

A method for identifying and tracking a container handled by a crane in a container terminal includes the step of
- selecting the correct camera or cameras when a container is near or approaching the camera level,
- setting the correct image size of the camera by changing the zoom value
- capturing one or more images of the container and/or its ID marking area,
- analyzing the captured images to identify the container ID number
- recording/storing the ID number of the detected container.

Other objects, features, and advantages of the invention will become evident in light of the following detailed description considered in conjunction with the enclosed drawings and defined by any of the dependent claims.

### Brief Description of Drawings

For better understanding of the present invention, reference will be made to the accompanying drawings in which:
Figure 1 is an overview of a system according to the invention showing a rail-mounted crane loading containers from a truck, located between the legs of the crane, to a container ship.
Figure 2 is a similar view as figure 1 but where a truck is located behind the crane, in the backreach area of the crane.

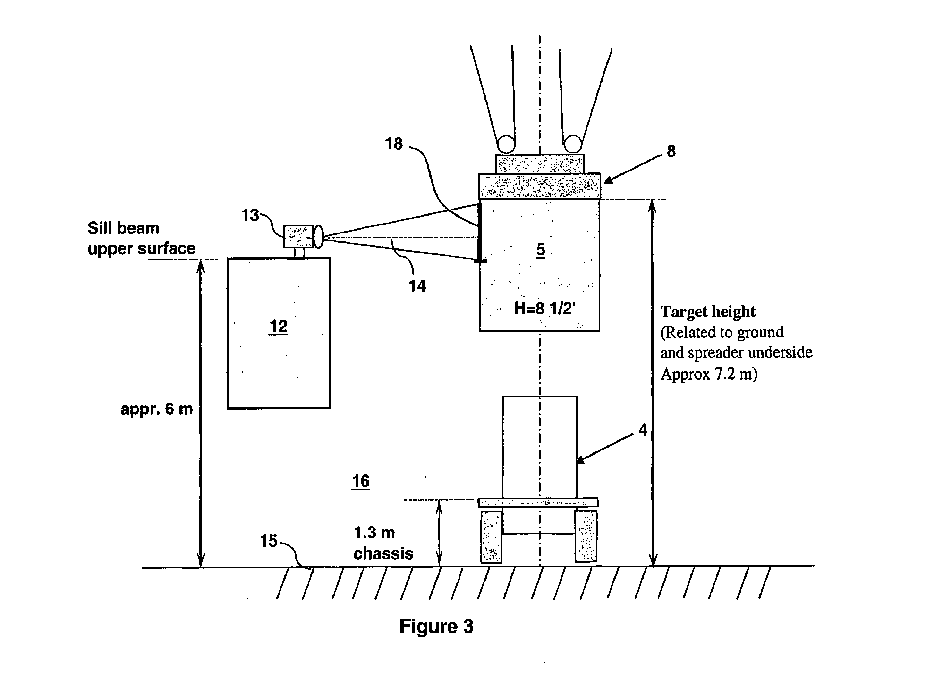

Figure 3 shows more in detail a side view of a container lifted by a spreader from a truck up to the camera level.
Figure 4 shows a side view of a container identification marking area, where it is located on the container and the camera image area required for ID identification.
Figure 5 illustrates schematically a side view of the different positions possible where a container identification ID marking area may appear in the loading area of a crane.
Figure 6 shows, from above, the crane loading area, the locations of the different cameras, the different possible positions where containers to be loaded/unloaded can be located, as well as the centre line of the trolley.
Figure 7 shows a block diagram of a single crane system.
Figure 8 shows a block diagram of a multiple crane system with a central OCR unit for more than one crane.
Figure 9 shows a flowchart over a normal case of the system work cycle.

### Description of Preferred Embodiments of the Invention

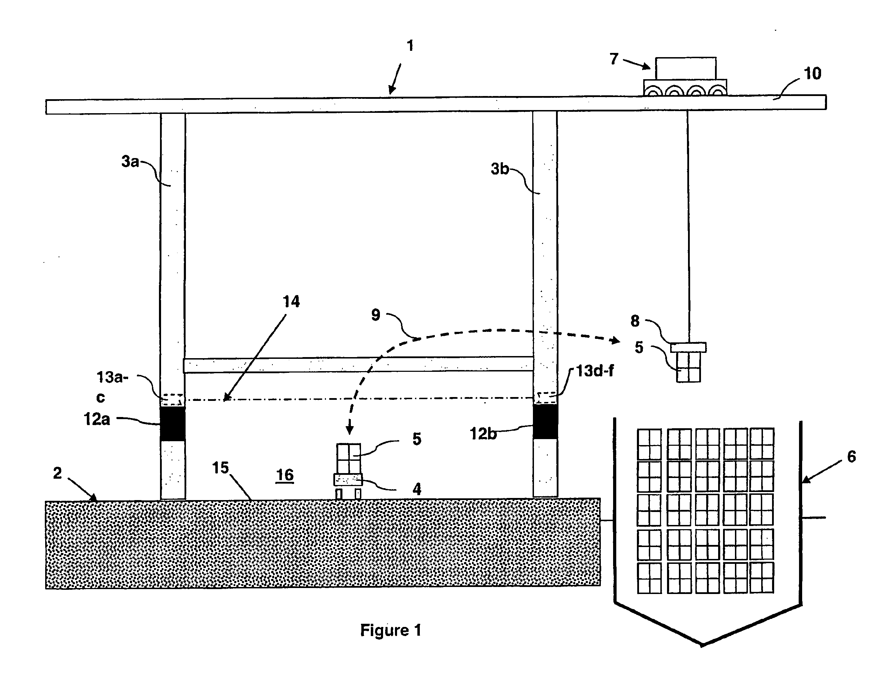

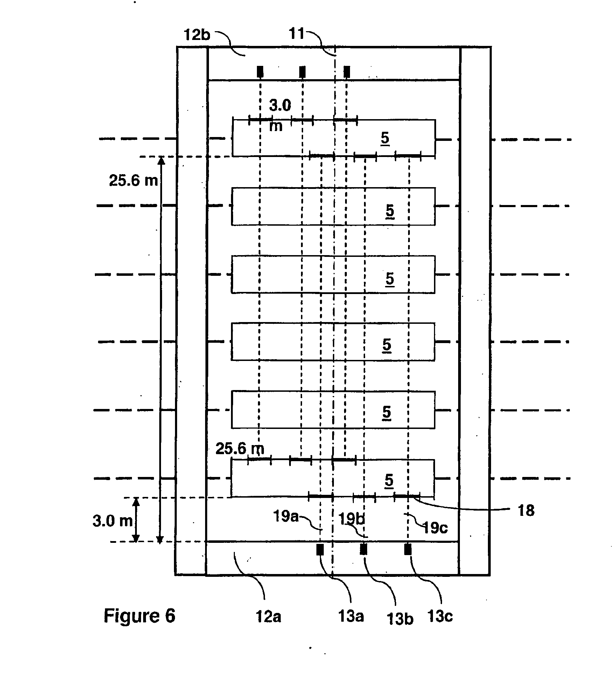

Figure 1 shows a rail-mounted container crane 1 located on a quay 2. On the quay 2, and between the legs 3a,b of the crane 1, i.e. the loading area 16 of the crane 1, a truck 4 with a container 5 is indicated and along the quay 2 a ship 6 for containers 5 is berthed. The crane 1 is, by help of a trolley 7 and a spreader 8, loading a container 5 from the truck 4 onto the ship 6 and the loading path 9 of the spreader 8 and container 5 is indicated with a curved arrow. The trolley 7 of the crane 1 is able to move in two directions on a rail 10 along a trolley centre line 11 (see fig 6).

The crane 1 has two sill beams 12a,b on which at least one, preferably three, cameras 13a-f are arranged on each sill beam 12. The cameras 13 can be any type of video cameras or digital cameras or similar and are arranged in such a way that their lens axis or optical centre are essentially horizontal and/or parallel to a camera level 14 and/or the centre line of the spreader 8. Of course it may be possible to locate the cameras 13 in a different angle for special purposes. The cameras 13 are arranged on the crane 1 at a distance from each other, corresponding to the difference in locations where the container 5 marking areas 18 of different container 5 sizes may appear.

The camera level 14 is located on a certain distance above the upper surface 15 of the quay 2, preferably about 6 meters above the surface/ground. Where the ID marking area 18 of a container 5, during loading/unloading, passes this camera level 14 is defined as the cross point. The cameras 13 are controlled by a camera control system CCR. The cameras 13 located on both sill beams 12 are directed inwards, i.e. into the center of the loading area 16 of the crane 1, in order to make it possible for the cameras 13 to face both sides of containers 5 being handled by the crane 1.

The camera control system CCR is arranged to determine the relevant zoom position of each activated camera 13 out of information of the spreader (8) position transmitted from the crane control system CCS when an antisway control is used as part of the CCS Crane Automation 25.

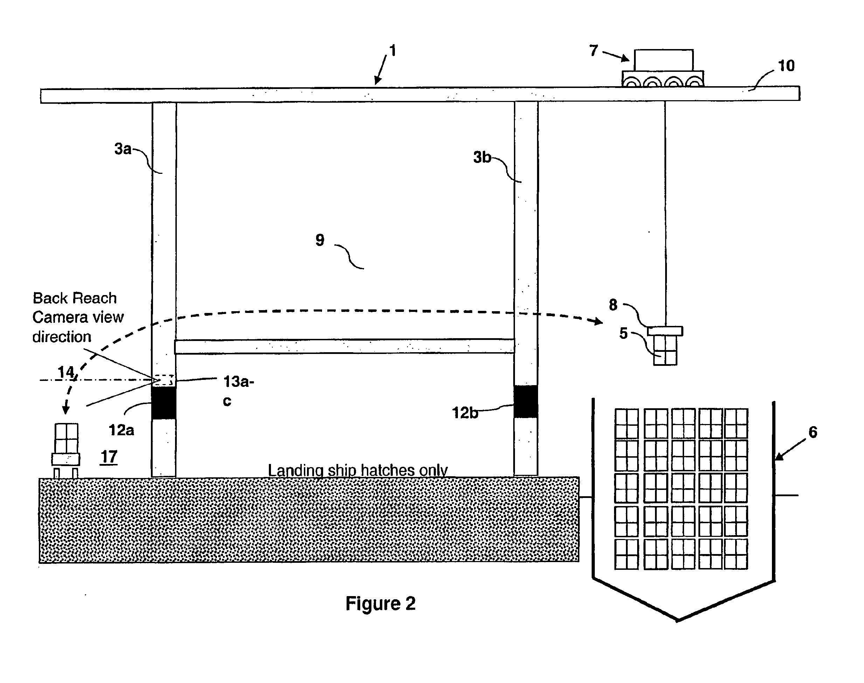

In some ports (see fig 2) the containers 5 are loaded or unloaded from the backreach area 17 of the crane 1, behind (to the left of) the rear sill beam 12a. In this case only ship hatches are landed between the rails (not shown) and the legs 3 of the crane 1. The cameras 13 are in this case located on the landside sill beam 12a and directed towards the backreach area 17. Only one-sided image recording is possible in this case. Otherwise the procedure is unchanged.

Containers 5 that are handled by cranes 1 in a container terminal can be of different sizes. The length of the containers 5 can typically be 20' or 40' and the spreader 8 is adjusted by the driver and/or the crane drive system to the different sizes in order to be able to connect to and lift the containers 5. The spreader 8 also can be adjusted to lift two 20' containers at the same time.

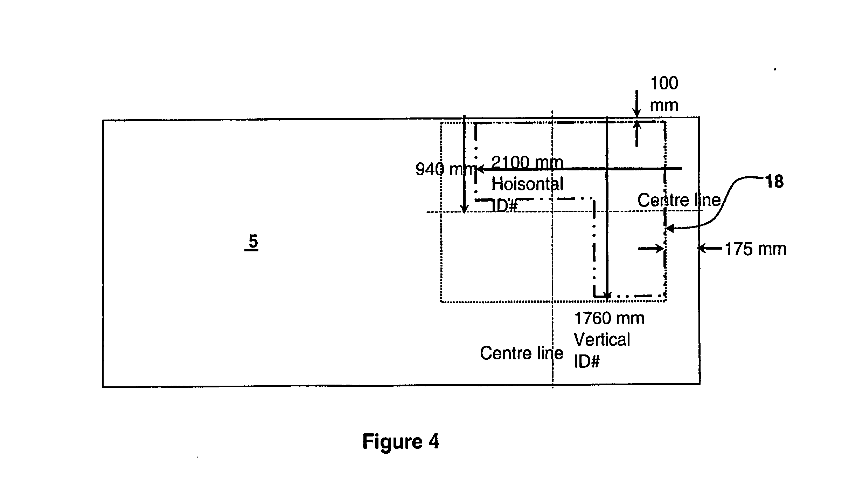

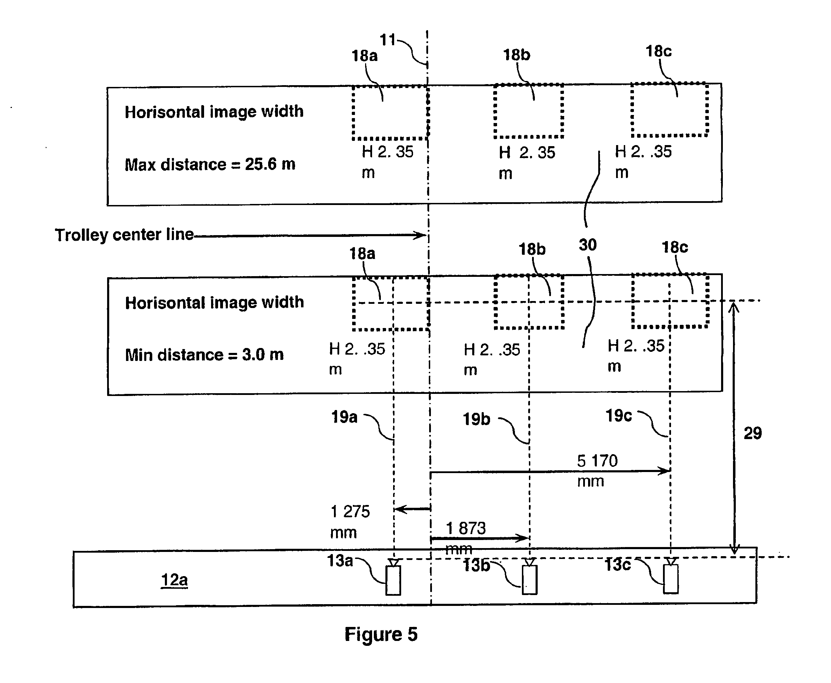

Each container 5 has a marking area 18 (figure 4) comprising a unique ID, i.e. a number or similar, not shown. The marking area 18 is located at a certain position of both long sides of the container 5 according to ISO 6346. The marking area 18 is located in the upper right corner of the container 5 and the centre of the marking area 18 is approximately 95 cm from the top and 132 cm from the right corner of the container 5. Figure 5 shows examples of where these ID marking areas 18 a-c of the containers 5 may appear in the front of the cameras considering that there are containers 5 with different sizes. The marking area 18 is always related to the height of the spreader underside above ground, also called "hoist position". Therefore, the marking area 18 appears at the camera level 14 at the same hoist position and is not dependent on the container height which can vary from 8 up to 9 ½ feet, typically 8 ½ or 9 ½ feet.

In order to safely capture an image of the ID marking areas 18 of all possible container sizes, images are captured of each marking area 18a-c by a separate camera 13a-c.

With reference to figure 5 and 6 there is therefore provided three cameras 13a-c on each sill beam 12a,b. Each camera 13 is located in parallel lines 19a-c each coincide with one of three possible positions of a container ID marking area 18. The correct camera 13a-f, (i.e. that camera 13 that is located on the position where the container will pass) on each side, is activated depending on the position of the spreader 8 width information of which is known/generated in advance by the crane drive system and crane control system CCS. The containers 5 can appear on varying distances from the cameras 13 (and on different lines 19a-c) and the exact zoom position, i.e. the distance from the camera 13 to the container 5 side surface 30, is known and defined by the information of the trolley 7 or spreader 8 position. This information or these data are transmitted to the camera control system CCR, i.e. when the container 5 is arriving to or is approaching the camera level 14 from above or from below. The camera view must cover the marking area 18 and has typically 5 to 42 degrees horizontal view working angle.

The final capture procedure of the image of the containers ID marking area 18 is determined and activated/started by the spreader height position relative to the camera level 14. When the container ID marking 18 passes a certain level (at a certain distance from the camera level 14, about 5 to 7 meters, preferably 6 meters, above ground) and approaches the camera level 14 the correct cameras 13 are activated/started and images are captured and stored. In order to minimize the need for storing capacity a limited number of images (preferably about 10 images) are captured and stored on a disc in a CCR database unit 21. An OCR evaluation unit 20 are arranged to analyse the images captured and identify the containers 8 ID.

According to the invention the CCR and CCS units is connected to each other via a link 28 in such a way that the information (data and logistic signals) from the crane drive system can be exchanged between the two units. The CCR is arranged to activate/start the correct camera or cameras 13a-f, normally only two at a time, one on each sill beam 12a,b, depending on the position of the spreader width (e.g. 20', 2x20' or 40') which is detected or known in advance by the crane control system CCS and the spreader width thereby determines where the marking area 18 of the container 5 will appear in the loading area 16 of the crane in front the cameras 13a-c. The information of the spreader width is transferred from the crane control system CCS to the camera control system CCR.

The exact zoom position, i.e. the distance 29 from the cameras 13 to the container side surface 30, is defined by the trolley 7 position (or the spreader 8 position if an antisway system is used by the crane 1). These data is transmitted to the camera control system CCR with an update interval of typically 200 ms. The height and hoisting speed of the spreader 8 is also transmitted to the camera control system CCR with an update interval of 50 to 200 ms, typically 200 ms. At every update, the CCR system calculates the Expected Time of Arrival (ETA) of the container ID marking area 18 to reach the height of the camera level 14, from above or from below, by dividing the remaining hoisting distance to the camera level 14 with the prevailing hoisting speed.

When the calculated ETA value becomes close to the time needed for moving the camera zoom between its endpoints or end positions, the CCR system changes the zoom position of the selected camera 13 to a value determined by the trolley 7 (or spreader 8) position. As the value changes, the zoom of the camera 13 will follow the changes until the image capturing procedure has stopped (see below), after which the zoom function of the camera 13 will rest.

Unnecessary zooming will shorten the expected life of the camera zoom system. The above procedure reduces the active time of operation to a few seconds typically per cycle.

The time frame for capturing of images for OCR analysis is determined by the spreaders 8 vertical movements. This will enable CCR to determine when to start and when to stop the capturing of images.

Capturing of images from the selected camera 13 is started, at the latest, when the ETA value reaches between one and two times of the update interval for the hoist position. Capturing is stopped after that the container target marking area 18 has surely passed beyond (above or below depending on the direction of the movement) the camera level 14, by comparing the updated hoist position value to the value of the camera level 14. After the marking area 18 has passed the camera level 14, a limited number of images, about 5 to 20, typically 10 at a high hoist speed, have been captured, out of which one image at a time can be selected and transmitted to the OCR unit 20 for analysis, until the container ID is identified as correct with a high degree of reliability. The ID (i.e. a number) is then sent to the Control & Interface unit 26 and stored on the CCR Database 21. The ID may also be sent back to the CCS unit and also to the Terminal Landside System.

If the hoist speed is very low while the target marking area 18 is passing the camera level 14, the number of images may go beyond 20 before CCR stops the capturing, in order to ensure that the ID is captured correctly and completely.

The OCR evaluation unit 20 has a capacity of finding the ID number of an image in about 50 to 500 ms, typically 100 ms. By using an OCR evaluation unit 20 that is faster than the camera capturing speed, i.e. maximum 25 images/second, it is possible to eliminate the saving of images and send the image information to the OCR unit 20 immediately after being captured. In this way, the stopping of zoom and image capture is determined by the correct and reliable ID number being identified/analysed.

The capturing of images is made while the container has been hoisted from a truck or the ground, and while the target marking area 18 is passing the camera level 14. The height of the spreader 8 underside relative to ground is then between 6 to 8 meters, preferably around 7,2 meters. Preferably, this will occur before the trolley 7 starts moving. Limited trolley 7 movements can be tolerated during image capturing, since the zoom position is quickly moved (a short distance) to compensate for a short spreader 8 distance change. The hoist velocity is in this moment typically 0,5 meter per second, but higher speeds can be tolerated by matching the camera 13 exposure time to the higher speed.

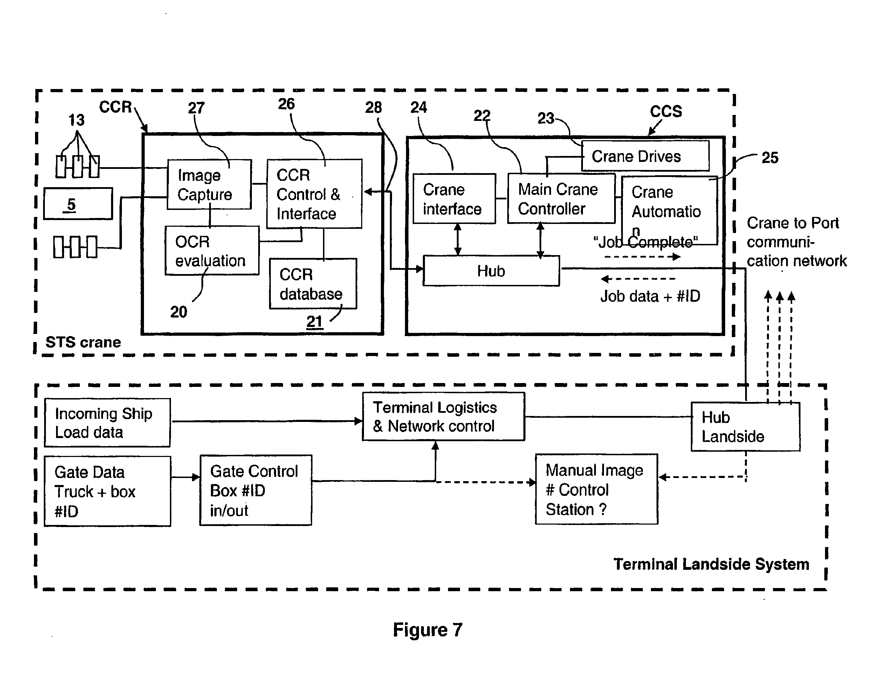

The block diagram of figure 7 shows the crane 1 with related equipment and the landside, and how the communication between the units are arranged.

A landside computer can work as a control station where images are manually controlled to determine cases where readability is low. Such a control station can also work as a long time storage of images from one or more cranes 1, where they can be recovered later for verification.

The crane side equipment seen is CCR and CCS and how they are communicating with each other. CCS has a Crane Interface link 24 to the Main Crane Controller 22, which can be linked to any existing Crane Automation unit 25, such as Ship data and cell positions on the ship 6. Speed and position data is sent from the Crane Drives 23 to the Main Crane Controller 22.

In the CCR, the Control & Interface 26 influences the Image Capture unit 27 of camera signals by using video grabber electronics. When the container 5 has passed the image capture camera level 14, CCR will command the video grabber memory to send images to OCR evaluation unit 20 for analysis. The OCR evaluation unit 20 will respond to CCR after analysis of each image is completed. The cycle will continue until OCR evaluation unit 20 reports the container ID of the image with the highest reliability.

The combination of using video cameras 13 having analogue signal output with high image frequency, typically 25 per second, and a video grabber electronics (Image Capture) in the computer containing the CCR software, it is possible to ensure that the best image is captures during the limited time of marking area 18 passing in front of the camera. To use single image cameras is also possible, but the task of correctly timing the best single shot becomes more sensitive.

The images containing the best/correct ID number and the full size container image are stored, together with the ID number itself and time, in a local CCR database unit 21.

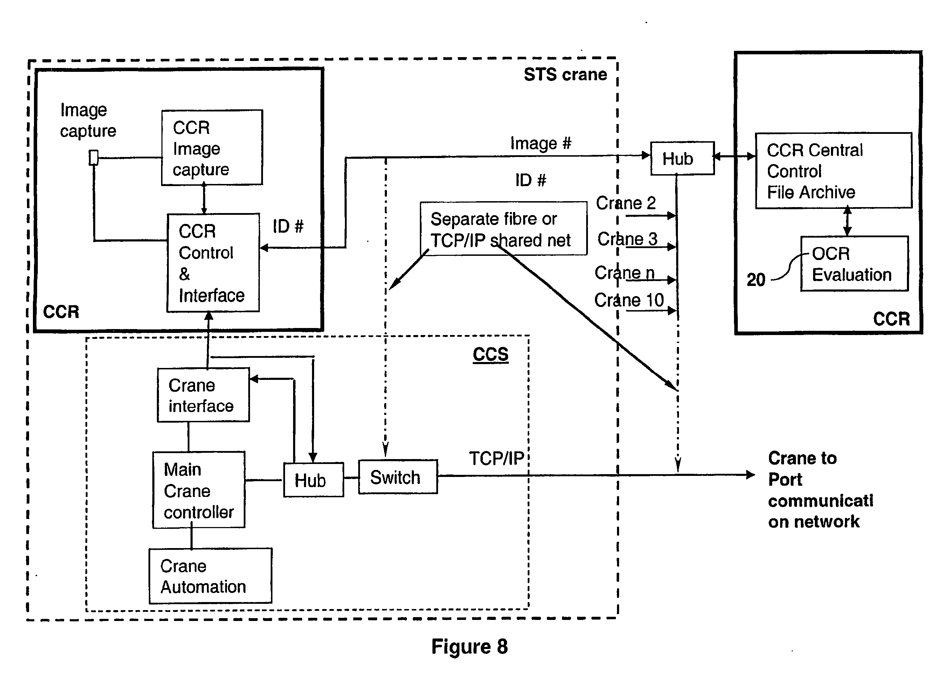

In figure 8 is described that a system according to figure 7 can be modified for a terminal where several cranes 1 are equipped with a system of the present invention. By using a landside communication line, i.e. a fibre optics line, connected to a central OCR evaluation unit 20, the image analysis of multiple cranes can be managed. Since the OCR analysis works relatively fast, and the images of the container ID are relatively few, this is a more cost effective alternative. Image capturing and storage is then centralised to one computer carrying the OCR software. In this way up to 10 cranes 1 can be managed by the same OCR evaluation unit 20. A faster OCR or more than one centralised OCR can be arranged to manage a very large terminal.

The success of finding the ID with all characters clearly and sharply present depends on the correct container target marking area 18 height when the image capturing starts and stops. Due to hoist wire rope stretching/elongation over time, and especially for new installed wire ropes, the ideal container 5 height position for starting and stopping the capturing of images for analysis will slowly change. The CCR is arranged to automatically create a wire rope stretching/elongation compensation by applying a correction value. The CCR will find out which one of the images, counted from the beginning of the capturing procedure, that results in the best (most correct and good) analyse of the container ID. When the image number becomes too large, a correction value is applied that recalibrates the container height value that initiates the starting and stopping of the recording of images. Thus, an automatic wire rope stretching/elongation compensating mechanism is created.

In addition, the correct image capture is affected by any, of mechanical or electrical origin, deviation between the camera level 14 and the true slope of the optical lens axis of the cameras 13, after being permanently installed. If such deviation appears, it can be entered by initial calibration during first startup as a linear capture height correction factor relative to the trolley 7 position (or actual distance from the camera lens to the target marking area 18). In this way, CCR will compensate automatically the height of start and stop of image capturing. This correction factor is entered for each individual camera 13 in the system. The camera control system (CCR) is accordingly arranged to automatically create a correction, if a camera (13) lens axis is not essentially parallel to the camera level (14), and that recalibrates the container height value that initiates the starting and stopping of the capturing of images.

Alternatively to using the hanging load position (the trolley 7 position) for the exact setting of the zoom value for the selected camera 13, each camera 13 can be equipped with an autofocus setting mechanism using i.e. a laser beam, ultra sound or other known method of distance measurement to define the correct zoom value prior to capturing of images.

In order to improve the quality of the images captured, and to improve the OCR analysis performance, one or more lamps are arranged in such a way that the container ID marking area 18 is illuminated. The camera control system CCR is arranged with a communication link, cables or a radio link, to each camera 13 and data including the position of each cameras diaphragm and exposure time used is transferred to the camera control system CCR. A request for the illumination to be switched on, or off, is generated when the preset limits are reached.

One image from each side of the container is stored for manual/visual verification of the container marking area 18. These images can be attached to the immediate job report transmission or later recalled for visual viewing. In particular, when one side ID is identified and recorded as different from the other side ID, a manual/visual determination of a container ID that may be partly unreadable due to environmentally distortion, partially covered by dirt, corroded, variations in character types, the background of the numbers, light conditions etc, will increase the overall reliability of the container tracking and "job complete" report. This possibility facilitates a robust and reliable tracking system.

One of the cameras 13a-f that is not, for the moment, used for ID analyzing and recording can be zoomed out to an angle of view that will capture the entire container 5 side to side. Two more images are in this way stored or sent to the interface for transmission to the port central unit. A manual/visual verification of the container 5 status is thereby created for later use in case of damage control.

After being lifted, the container 5 is moved to a different point opposite to the quayside position. When it, is released from the spreader 8, the automation has logged the position of pick-up, the position of release, the time of release and it has received the real container ID. Only at this point, the information is regarded as "job complete" for transmission to the output media, normally a network to port logistics. A printer, a display, a radio communication can alternatively be used as output. As required, this information can be coordinated with a job instruction from the port logistics to determine whether there is a difference in the job performed to the instruction, including the handling of a container with an unexpected ID. Depending on the degree of crane control automation, the "job complete" report will contain position data related to the crane or the ship (as Bay, Cell and Height parameters/values). Generally, the system works independent of the mode of crane operation (auto-pos or manual).

For its function the camera control system CCR uses the following signal values/parameters transferred from the crane control system CCS:
init signal (start cycle) job-id,
spreader size,
trolley position and speed,
hoist position and speed,
abort signal (stop cycle),
delete (job-id),
on/off of CCR system and
commands to database with images stored (SQL or other).

The camera control system CCR transmits the following signal values/parameters to the crane control system CCS:
container ID number,
capture reliability level (in %),
error code,
measurement error code,
equipment status and warning messages,
time stamp and
On/Off signal for crane lighting support.

At least part of these signal values/parameters, as well as time, are used to carry out the system and method according to the invention.

Depending on the local conditions (crane structure, lamp location, terminal illumination or weather extremes) of a crane in a terminal, special additional lamps can be mounted to illuminate the ID marking area of containers during the image capturing process.

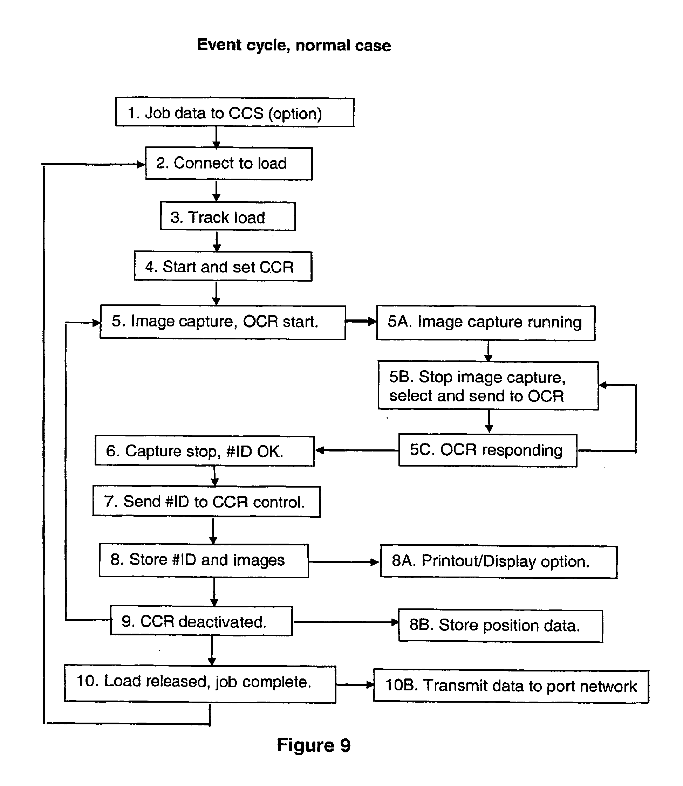

Figure 9 shows a flowchart over a normal case of the systems event cycle.

| | **Event cycle, normal case** | **CCS action** |
|---|---|---|
| 1 | Job data is issued to CCS crane | Option for Automation. Expected #ID possible. |
| 2 | Crane driver moves spreader and connects to a container. | Spreader size, position and time are recorded. Option for Auto-mation.) |
| 3 | Spreader moves towards image capture position and the load is tracked. | Crane interface is checking Hoist and trolley positions (or load position if a sway control is installed |
| 4 | CCR receives init signal. Correct cameras are selected. Correct zoom angle is selected/prepared. | At the preset hoist position, the Init order is given to CCR along with spreader, trolley and hoist position and speed data. |
| 5 a-c | Image capture will begin at an expected time interval before passing the Capture Height. Capture height is passed. | Hoist position and speed is continuously transmitted. |
| 6 | When the hoist has passed the capture height, image grabbing is stopped. The image most likely to be the best one is sent to OCR first. Images are scrolled until OCR reports a readable #ID | Hoist pos and speed is continuously transmitted. |
| 7 | A selected few images above and below Capture Height are sent to OCR evaluation one by one. OCR responds with correct #ID which is sent back to the CCR control. | Shortly before the Hoist Capture Height position, depending on hoist speed, CCR begins image capture. |
| 8 | Images from both sides contain- ing full size image and #ID image are sent to a SQL data-base for saving (in CCR control or central file archive). | Correct #ID is received from the CCR.control. It is stored together with pickup data. Direct printout locally or display or transmission to port is possible. |
| 9 | CCR control is deactivated for next Init order. | When the Correct #ID is received from CCR.control, it is stored together with pickup and release data |
| 10 | Crane driver is releasing the load in a new position relative to the quayside (from or to the ship). CCS control is deactivated until next pickup is made or job order is received. | Job is completed and position data are sent back to Port Network with real recorded #ID and time of execution. |

The table below illustrates the ID marking analysis and examples of events, false move cases and special cases of handling OCR response to a selected image.

| | |
|---|---|
| Case 1. CCR will only begin image grabbing if a start order is given. | If the load passes the Capture Height multiple times, no new start order is given. |
| Case 2. Crane interface will delete the last stored data and images for a job not completed. | If the load passes the Capture Height but is not going across the quayside, or being released on the same side that is was picked, CCS issues a Delete command. |
| Case 3. Crane interface will check expected #ID with the #ID recorded by OCR | If there is a discrepancy, the #ID image can be attached to the job complete transmission for visual verification. |
| Case 4. CCR will manage any discrepancy in reading between the two sides: - one sided #ID only - different #ID on both sides - wrong check digit on one side other cases | CCS will be informed about readability and type of discrepancy that has occurred. CCS may take action to attach images to the job report for visual veification. |

The present invention has a number of possibilities and advantages. The target container 5 can be moving during the image capturing procedure, which means that there is a small or no delay at all in the container handling cycle. Several trucks 4 can be located within the loading area 16 or passing the loading area 16 without blocking the image capturing, analyzing or recording. The trucks 4 can be freely positioned for loading/unloading as the camera zoomposition is updated online.

Each ID number of both sides of the container 5 is detected and manual/visual image verification is possible if the two IDs is deviating from each other. Stationary cameras 13a-f is mounted on the sill beams 12a,b via stable fixing foundations giving a system that is reliable and easy to access for service. The system can handle all types of standardized containers 5 such as 20', 2x20', 40', 42' or 45'. Other sizes can also be used and if necessary more cameras 13 can be included in the system or the cameras 13 can be relocated.

A method according to the invention may also include the steps of recording/storing the time and position of disconnecting the detected container from the spreader and detecting the completion of load/unload cycle to/from a ship, linking this information to other data above, and transmitting it to the terminal logistics.

Information/data generated by the camera control system (CCR), is transmitted to the crane control system (CCS), which is arranged to use that information as part of a container tracking and job order handling. The camera control system (CCR) is also arranged to transmit the information of the container ID and a value of the reliability of the ID analysis as well as a measurement error code, defined by a series of different errors, to the crane control system (CCS) .

At least one camera (13) is also arranged to capture images of the entire container (5) in order to determine the presence of possible external container damages.

It is of course also possible to use the concept according to the invention for different portal beam heights. The"job complete"can also be linked to ID image presentation or compared to expected result.

A method according to the invention may also, at least partly, be performed under control of a set of computer readable instructions or code means contained in a computer program storage device for making a computer or processor perform any of the steps of the above described method.

The invention may also use a computer readable product for carrying out the method according to the invention.

## Claims

1. A container crane (1) having a system for automatically capturing and/or analyzing images of at least a part of a container that is handled by the crane, preferable at port areas, comprising at least one camera, a camera control system and a crane control system, the camera control system (CCR) is arranged to receive information generated in, and/or transmitted from, the crane control system (CCS) thereby controlling at least one of the functions of the cameras (13) in order to capture one or more images of at least a part of the container (5)
**characterised by** that,
of at least three cameras (13) are arranged on the such crane (1) that the in lens axes or optical centres are essentially horizontal and/or parallel to a camera level (14) and/or the centre line of the spreader (8) and said at least three cameras are any type of video cameras or digital cameras or similar.

2. A container crane (1) having a system for capturing and/or analyzing images according to claim 1,
**characterised by** that,
the camera level (14) is located at a distance of 5 to 7 meters from ground.

3. A container crane (1) having a system for capturing and/or analyzing images according to claim 2,
**characterised by** that,
the camera level (14) is located at a distance of about 6 meters above ground.

4. A container crane (1) having a system for capturing and/or analyzing images according to claim 1,
**characterised by** that,
the cameras (13) are arranged on the crane (1) in order to capture images of both sides of the container (5).

5. A container crane (1) having a system for capturing and/or analyzing images according to claim 1,
**characterised by** that,
the cameras (13) are arranged on the crane (1) in order to capture images;of the marking area (18) of a container (5) and for covering all positions where a container (5) marking area (18) may occur.

6. A container crane (1) having a system for capturing and/or analyzing images according to any of the preceding claims,
**characterised by** that,
the camera control system (CCR) is arranged to activate at least one camera (13) out of information transmitted from the crane control system (CCS).

7. A container crane (1) having a system for capturing and/or analyzing images according to any of the preceding claims,
**characterised by** that,
the camera control system (CCR) is arranged to select what camera or cameras (13) should be activated for image capturing, out of information of the spreader (8) size, transmitted from the crane control system (CCS).

8. A container crane (1) having a system for capturing and/or analyzing images according to any of the preceding claims,
**characterised by** that,
the camera control system (CCR) is arranged to determine the relevant zoom position of each activated camera (13) out of information of the trolley (7) position transmitted from the crane control system (CCS).

9. A container crane (1) having a system for capturing and/or analyzing images according to claim 8,
**characterised by** that,
the relevant zoom position of the cameras (13) is defined by that the image captured is essentially covering the target container (5) marking area (18).

10. A container crane (1) having a system for capturing and/or analyzing images according to any of the preceding claims,
**characterised by** that,
the camera control system (CCR) is arranged to start and/or stop the image capturing procedure out of information of the spreader (8) vertical speed and the spreader (8) height position transmitted from the crane control system (CCS).

11. A container crane (1) having a system for capturing and/or analyzing images according to any of the preceding claims,
**characterised by** that,
the camera control system (CCR) is arranged to calculate the estimated time of arrival (ETA) out of information of the spreader (8) vertical speed and spreader (8) height position transmitted from the crane control system (CCS).

12. A container crane (1) having a system for capturing and/or analyzing images any of the preceding claims,
the cameras are arranged in such a way that the lens axis is essentially parallel to the camera level (14) and the center line of the spreader (8).

13. A container crane (1) having a system for capturing and/or analyzing images according to any of the preceding claims,
the cameras (13a-kf) are arranged on the crane (1) at a distance from each other, corresponding to the difference in locations where the container (5) marking areas (18) of different container (5) sizes may appear.

14. A container crane (1) having a system for capturing and/or analyzing images according to any of the preceding claims,
**characterised by** that,
information/data generated by the camera control system (CCR), is transmitted to the crane control system (CCS), which is arranged to use that information as part of a container tracking and job order handling.

15. A container crane (1) having a system for capturing and/or analyzing images according to claim 14
**characterised by** that,
the camera control system (CCR) is arranged to transmit the information of the container ID to the crane control system (CCS).

16. A container crane (1) having a system for capturing and/or analyzing images according to the claims 14 and/or 15,
**characterised by** that, the camera control system (CCR) is arranged to transmit a value of the reliability of the ID analysis to the crane control system (CCS).

17. A container crane (1) having a system for capturing and/or analyzing images according to claim 14, 15 or 16,
**characterised by** that,
the camera control system (CCR) is arranged to transmit a measurement error code, defined by a series of different errors, to the crane control system (CCS).

18. A container crane (1) having a system for capturing and/or analyzing images according to any of the preceding claims,
**characterised by** that,
at least one camera (13) of the cameras is arranged to capture images of the entire container (5) in order to determine the presence of possible external container damages.

19. A container crane (1) having a system for capturing and/or analyzing images according to any of the preceding claims,
**characterised by** that,
the camera control system (CCR) is arranged to determine the relevant zoom position of each activated camera (13) out of information of the spreader (8) position transmitted from the crane control system (CCS) when an antisway control is used as part of the CCS Crane Automation (25).

20. A container crane (1) having a system for capturing and/or analyzing images according to claim 12,
**characterised by** that,
the camera control system (CCR) is arranged to automatically create a wire rope stretching/elongation compensation by applying a correction value that recalibrates the container height value that initiates the starting and/or stopping of the capturing of images.

21. A container crane (1) having a system for capturing and/or analyzing images according to claim 12,
**characterised by** that,
the camera control system (CCR) is arranged to automatically create a correction, if a camera (13) lens axis is not essentially parallel to the camera level (14), and that recalibrates the container height value that initiates the starting and stopping of the capturing of images.

22. A method for identifying and tracking a container handled by a container crane (1) in a container terminal using a container crane (1) according to any of the preceding claims, comprising,
- selecting the correct camera or cameras (13) when a container (5) is near or approaching the camera level (14),
- setting the correct image size of the camera (13) by changing the zoom value
- capturing one or more images of the container (5) and/or its ID marking area (18),
- analyzing the captured images to identify the container (5) ID number, and
- recording/storing the ID number of the detected container (5).

23. A method for identifying and tracking a container handled by a container crane (1) in a container terminal, according to claim 22, comprising,
- recording/storing the time and position of disconnecting the detected container (5) from the spreader (8),
- detecting the completion of load/unload cycle to/from a ship (6), linking this information to other data above, and transmitting it to the terminal logistics.

24. A computer program comprising computer program code means for carrying out the steps of a method according to any of the claims 22-23.

## Patentansprüche

1. Ein Containerkran (1), der ein System aufweist zum automatischen Aufnehmen und/oder Analysieren von Bildern von mindestens einem Teil eines Containers, der durch den Kran gehandhabt wird, vorzugsweise in Hafengebieten, umfassend mindestens eine Kamera, ein Kamerakontrollsystem und ein Krankontrollsystem, wobei das Kamerakontrollsystem (CCR) eingerichtet ist, in dem Krankontrollsystem (CCS) erzeugte und/oder von diesem übermittelte Information zu empfangen, wodurch es mindestens eine der Funktionen der Kameras (13) kontrolliert, um ein oder mehrere Bilder mindestens eines Teils eines Containers (15) aufzunehmen,
**dadurch gekennzeichnet, dass**
mindestens drei Kameras (13) auf dem Kran (1) angeordnet sind, so dass ihre Linsenachsen oder optischen Mittelpunkte im Wesentlichen horizontal und/oder parallel zu einem Kameralevel (14) und/oder der Mittelpunktlinie des Spreaders (8) sind, und dass die mindestens drei Kameras eine beliebige Art von Videokameras, Digitalkameras oder Ähnlichem sind.

2. Ein Containerkran (1) nach Anspruch 1, der ein System aufweist zum automatischen Aufnehmen und/oder Analysieren von Bildern,
**dadurch gekennzeichnet, dass**
der Kameralevel (14) in einem Abstand von 5 bis 7 Metern vom Grund befindlich ist.

3. Ein Containerkran (1) nach Anspruch 2, der ein System aufweist zum automatischen Aufnehmen und/oder Analysieren von Bildern,
**dadurch gekennzeichnet, dass**
der Kameralevel (14) in einem Abstand von ungefähr 6 Metern vom Grund befindlich ist.

4. Ein Containerkran (1) nach Anspruch 1, der ein System aufweist zum automatischen Aufnehmen und/oder Analysieren von Bildern,
**dadurch gekennzeichnet, dass**
die Kameras (13) auf dem Kran (1) angeordnet sind, um Bilder von beiden Seiten des Containers (5) aufzunehmen.

5. Ein Containerkran (1) nach Anspruch 1, der ein System aufweist zum automatischen Aufnehmen und/oder Analysieren von Bildern,
**dadurch gekennzeichnet, dass**
die Kameras (13) auf dem Kran (1) angeordnet sind, um Bilder der Markierungsfläche (18) eines Containers (5) aufzunehmen und alle Positionen abzudecken, wo eine Container(5)-Markierungsfläche (18) auftreten mag.

6. Ein Containerkran (1) nach einem der vorhergehenden Ansprüche, der ein System aufweist zum automatischen Aufnehmen und/oder Analysieren von Bildern,
**dadurch gekennzeichnet, dass**
das Kamerakontrollsystem (CCR) eingerichtet ist, mindestens eine Kamera (13) aus von dem Krankontrollsystem (CCS) übermittelter Information heraus zu aktivieren.

7. Ein Containerkran (1) nach einem der vorhergehenden Ansprüche, der ein System aufweist zum automatischen Aufnehmen und/oder Analysieren von Bildern,
**dadurch gekennzeichnet, dass**
das das Kamerakontrollsystem (CCR) eingerichtet ist auszuwählen, welche Kamera oder Kameras (13) zur Bildaufnahme aktiviert werden sollen aus Information über die Spreader(8)-Größe heraus, die von dem Krankontrollsystem (CCS) übermittelt ist.

8. Ein Containerkran (1) nach einem der vorhergehenden Ansprüche, der ein System aufweist zum automatischen Aufnehmen und/oder Analysieren von Bildern,
**dadurch gekennzeichnet, dass**
das das Kamerakontrollsystem (CCR) eingerichtet ist, die relevante Zoomposition jeder aktivierten Kamera (13) zu bestimmen aus Information über die Laufkatzen(7)-Position heraus, die von dem Krankontrollsystem übermittelt ist.

9. Ein Containerkran (1) nach Anspruch 8, der ein System aufweist zum automatischen Aufnehmen und/oder Analysieren von Bildern,
**dadurch gekennzeichnet, dass**
die relevante Zoomposition der Kameras (13) **dadurch** definiert ist, dass das aufgenommene Bild im Wesentlichen die Zielcontainer(5)-Markierungsfläche (18) abdeckt.

10. Ein Containerkran (1) nach einem der vorhergehenden Ansprüche, der ein System aufweist zum automatischen Aufnehmen und/oder Analysieren von Bildern,
**dadurch gekennzeichnet, dass**
das Kamerakontrollsystem (CCR) eingerichtet ist, die Bildaufnahmeprozedur zu starten und/oder zu stoppen aus Information über die Spreader(8)-Vertikalgeschwindigkeit und die Spreader(8)-Höhenposition heraus, die von dem Krankontrollsystem (CCS) übermittelt ist.

11. Ein Containerkran (1) nach einem der vorhergehenden Ansprüche, der ein System aufweist zum automatischen Aufnehmen und/oder Analysieren von Bildern,
**dadurch gekennzeichnet, dass**
das Kamerakontrollsystem (CCR) eingerichtet ist, die geschätzte Ankunftszeit (ETA) zu berechnen aus Information über die Spreader(8)-Vertikalgeschwindigkeit und die Spreader(8)-Höhenposition heraus, die von dem Krankontrollsystem (CCS) übermittelt ist.

12. Ein Containerkran (1) nach einem der vorhergehenden Ansprüche, der ein System aufweist zum automatischen Aufnehmen und/oder Analysieren von Bildern,
wobei die Kameras in solcher Weise angeordnet sind, dass die Linsenachse im Wesentlichen parallel zu dem Kameralevel (14) und der Mittelpunktslinie des Spreaders (8) ist.

13. Ein Containerkran (1) nach einem der vorhergehenden Ansprüche, der ein System aufweist zum automatischen Aufnehmen und/oder Analysieren von Bildern,
wobei die Kameras (13a-kf) auf dem Kran (1) in einem Abstand voneinander angeordnet sind, die einem Unterschied in den Orten entsprechen, wo die Container(5)-Markierungsflächen (18) verschiedener Container(5)-Größen erscheinen mögen.

14. Ein Containerkran (1) nach einem der vorhergehenden Ansprüche, der ein System aufweist zum automatischen Aufnehmen und/oder Analysieren von Bildern,
**dadurch gekennzeichnet, dass**
durch das Kamerakontrollsystem (CCR) erzeugte Information/Daten an das Krankontrollsystem (CCS) übermittelt sind, welches eingerichtet ist, diese Information als Teil eines Containernachverfolgens und einer Auftragsorderhandhabung zu verwenden.

15. Ein Containerkran (1) nach Anspruch 14, der ein System aufweist zum automatischen Aufnehmen und/oder Analysieren von Bildern,
**dadurch gekennzeichnet, dass**
das Kamerakontrollsystem (CCR) eingerichtet ist, die Information über die Container-ID an das Krankontrollsystem (CCS) zu übermitteln.

16. Ein Containerkran (1) nach Anspruch 14 und/oder 15, der ein System aufweist zum automatischen Aufnehmen und/oder Analysieren von Bildern,
**dadurch gekennzeichnet, dass** das Kamerakontrollsystem (CCR) eingerichtet ist, einen Wert der Zuverlässigkeit der ID-Analyse an das Krankontrollsystem (CCS) zu übermitteln.

17. Ein Containerkran (1) nach Anspruch 14, 15 oder 16, der ein System aufweist zum automatischen Aufnehmen und/oder Analysieren von Bildern,
**dadurch gekennzeichnet, dass**
das Kamerakontrollsystem (CCR) eingerichtet ist, einen Messfehlercode, der durch eine Reihe verschiedener Fehler definiert ist, an das Krankontrollsystem (CCS) zu übermitteln.

18. Ein Containerkran (1) nach einem der vorhergehenden Ansprüche, der ein System aufweist zum automatischen Aufnehmen und/oder Analysieren von Bildern,
**dadurch gekennzeichnet, dass**
mindestens eine Kamera (19) der Kameras angeordnet ist, um Bilder des gesamten Containers (5) aufzunehmen, um das Vorhandensein von möglichen externen Containerschäden festzustellen.

19. Ein Containerkran (1) nach einem der vorhergehenden Ansprüche, der ein System aufweist zum automatischen Aufnehmen und/oder Analysieren von Bildern,
**dadurch gekennzeichnet, dass**
das Kamerakontrollsystem (CCR) eingerichtet ist, die relevante Zoomposition jeder aktivierten Kamera (13) zu bestimmen aus Information über die Spreader(8)-Position heraus, die von dem Krankontrollsystem (CCS) übermittelt wird, wenn eine Antischwingkontrolle als Teil der CCS Kranautomation (25) verwendet wird.

20. Ein Containerkran (1) nach Anspruch 12, der ein System aufweist zum automatischen Aufnehmen und/oder Analysieren von Bildern,
**dadurch gekennzeichnet, dass**
das Kamerakontrollsystem (CCR) eingerichtet ist, eine Drahtseilstreck/elongations-Kompensation automatisch zu erzeugen durch Anwenden eines Korrekturwerts, der den Containerhöhenwert rekalibriert, welcher das Starten und/oder Stoppen der Aufnahme von Bildern auslöst.

21. Ein Containerkran (1) nach Anspruch 12, der ein System aufweist zum automatischen Aufnehmen und/oder Analysieren von Bildern,
**dadurch gekennzeichnet, dass**
das Kamerakontrollsystem eingerichtet ist, eine Korrektur automatisch zu erzeugen, wenn eine Kamera(13)-Linsenachse nicht im Wesentlichen parallel zu dem Kameralevel (14) ist, und welche den Containerhöhenwert rekalibriert, welcher das Starten und Stoppen der Aufnahme von Bildern auslöst.

22. Ein Verfahren zum Identifizieren und Nachverfolgen eines Containers, der durch einen Containerkran (1) in einem Containerterminal unter Verwendung eines Containerkrans (1) nach einem der vorhergehenden Ansprüche gehandhabt wird, umfassend:
- Auswählen der richtigen Kamera oder Kameras (13), wenn ein Container (5) nahe dem Kameralevel (14) ist oder sich ihm nähert,
- Setzen der richtigen Bildgröße der Kamera (13) durch Verändern des Zoomwertes,
- Aufnehmen eines oder mehrerer Bilder des Containers (5) und/oder seiner ID-Markierungsfläche (18),
- Analysieren der aufgenommen Bilder, um die Container(5)-ID-Nummer zu identifizieren und
- Aufzeichnen/Speichern der ID-Nummer des detektierten Containers (5).

23. Ein Verfahren zum Identifizieren und Nachverfolgen eines Containers, der durch einen Containerkran (1) in einem Containerterminal gehandhabt wird, nach Anspruch 22, umfassend:
- Aufzeichnen/Speichern der Zeit und Position des Lösens des detektierten Containers (5) von dem Spreader (8),
- Detektieren der Vollendung eines Lade/Entlade-Zyklus auf ein/von einem Schiff (6), Verbinden dieser Information mit den anderen oben genannten Daten und ihr Übermitteln an die Terminallogistik.

24. Ein Computerprogramm umfassend Computerprogrammcodemittel zum Ausführen der Schritte eines Verfahrens gemäß einem der Ansprüche 22-23.

## Revendications

1. Grue (1) pour conteneurs ayant un système d'acquisition et/ou d'analyse automatique d'images d'au moins une partie d'un conteneur qui est manipulé par la grue, de préférence dans des zones portuaires, comportant au moins un appareil photographique, un système de commande d'appareil photographique et un système de commande de grue, le système de commande d'appareil photographique (CCR) est agencé pour recevoir des informations émises par le système de commande de grue (CCS) et/ou des informations à partir de ce système de commande de grue, pour ainsi commander au moins l'une des fonctions des appareils photographiques (13) afin d'acquérir une ou plusieurs images d'au moins une partie du conteneur (5), **caractérisée par le fait qu'**au moins trois appareils photographiques (13) sont disposés sur la grue (1) de telle sorte que leurs axes d'objectif ou centres optiques soient sensiblement horizontaux et/ou parallèles à un niveau (14) des appareils photographiques et/ou à la ligne centrale du cadre (8) de préhension et lesdits au moins trois appareils photographiques sont de n'importe quel type d'appareils photographiques vidéo ou d'appareils photographiques numériques ou similaires.

2. Grue (1) pour conteneurs ayant un système d'acquisition et/ou d'analyse d'images suivant la revendication 1, **caractérisée en ce que**
le niveau (14) des appareils photographiques se trouve à une distance de 5 à 7 mètres du sol.

3. Grue (1) pour conteneurs ayant un système d'acquisition et/ou d'analyse d'images conformément à la revendication 2, **caractérisée en ce que**
le niveau (14) des appareils photographiques se trouve à une distance d'environ 6 mètres au-dessus du sol.

4. Grue (1) pour conteneurs ayant un système d'acquisition et/ou d'analyse d'images suivant la revendication 1,
**caractérisée par le fait que**
les appareils photographiques (13) sont disposés sur la grue (1) afin d'acquérir des images des deux côtés du conteneur (5).

5. Grue (1) pour conteneurs ayant un système d'acquisition et/ou d'analyse d'images suivant la revendication 1,
**caractérisée par le fait que**
les appareils photographiques (13) sont disposés sur la grue (1) afin d'acquérir des images de la zone (18) de marquage d'un conteneur (5) et pour couvrir toutes les positions dans lesquelles une zone (18) de marquage de conteneur (5) peut apparaître.

6. Grue (1) pour conteneurs ayant un système d'acquisition et/ou d'analyse d'images suivant n'importe laquelle des revendications précédentes,
**caractérisée par le fait que**
le système de commande d'appareil photographique (CCR) est agencé pour activer au moins un appareil photographique (13) à partir d'informations émises par le système de commande de grue (CCS).

7. Grue (1) pour conteneurs ayant un système d'acquisition et/ou d'analyse d'images suivant n'importe laquelle des revendications précédentes,
**caractérisée par le fait que**
le système de commande d'appareil photographique (CCR) est agencé pour sélectionner l'appareil photographique ou les appareils photographiques (13) qui doit ou doivent être activé pour l'acquisition de l'image, à partir d'informations sur la dimension du cadre (8) de préhension, émises par le système de commande grue (CCS).

8. Grue (1) pour conteneurs ayant un système d'acquisition et/ou d'analyse d'images suivant n'importe laquelle des revendications précédentes,
**caractérisée par le fait que**
le système de commande d'appareil photographique (CCR) est agencé pour déterminer la position de zoom appropriée de chaque appareil photographique (13) activé, à partir d'informations sur la position du chariot (7), émises par le système de commande de grue (CCS).

9. Grue (1) pour conteneurs ayant un système d'acquisition et/ou d'analyse d'images suivant la revendication 8,
**caractérisée par le fait que**
la position appropriée de zoom des appareils photographiques (13) est définie **par le fait que** l'image acquise recouvre sensiblement la zone de marquage du conteneur (5) cible.

10. Grue (1) pour conteneurs ayant un système d'acquisition et/ou d'analyse d'images suivant n'importe laquelle des revendications précédentes,
**caractérisée par le fait que**
le système de commande d'appareil photographique (CCR) est agencé pour lancer et/ou arrêter la procédure d'acquisition d'images à partir d'informations, concernant la vitesse verticale du cadre (8) de préhension et de la position en hauteur du cadre (8) de préhension, émises par le système de commande de grue (CCS).

11. Grue (1) pour conteneurs ayant un système d'acquisition et/ou d'analyse d'images suivant n'importe laquelle des revendications précédentes,
**caractérisée par le fait que**
le système de commande d'appareil photographique (CCR) est agencé pour calculer le temps estimé d'arrivée (ETA) à partir d'informations, concernant la vitesse verticale du cadre (8) de préhension et sur la position en hauteur du cadre (8) de préhension, émises par le système de commande de grue (CCS).

12. Grue (1) pour conteneurs ayant un système d'acquisition et/ou d'analyse d'images suivant n'importe laquelle des revendications précédentes,
les appareils photographiques étant agencés de telle manière que l'axe de l'objectif soit sensiblement parallèle au niveau (14) des appareils photographiques et à la ligne centrale du cadre (8) de préhension.

13. Grue (1) pour conteneurs ayant un système d'acquisition et/ou d'analyse d'images suivant l'une quelconque des revendications précédentes,
les appareils photographiques (13a-kf) étant montés sur la grue (1) à une distance les uns des autres, correspondant à la distance d'emplacements, où les zones (18) de marquage de conteneur de différentes dimensions de conteneur (5) peuvent apparaître.

14. Grue (1) pour conteneurs ayant un système d'acquisition et/ou d'analyse d'images suivant l'une quelconque des revendications précédentes,
**caractérisée par le fait que**
des informations/données produites par le système de commande d'appareil photographique (CCR) sont transmises au système de commande de grue (CCS), qui est agencé pour utiliser ces informations comme une partie d'un suivi de conteneur et d'une gestion d'ordres de travail.

15. Grue (1) pour conteneurs ayant un système d'acquisition et/ou d'analyse d'images suivant la revendication 14,
**caractérisée par le fait que**
le système de commande d'appareil photographique (CCR) est agencé pour émettre des informations sur l'identification (ID) du conteneur au système de commande de grue (CCS).

16. Grue (1) pour conteneurs ayant un système d'acquisition et/ou d'analyse d'images suivant les revendications 14 et/ou 15,
**caractérisée par le fait que**
le système de commande d'appareil photographique (CCR) est agencé pour émettre une valeur de la fiabilité de l'analyse de l'identification (ID) au système de commande de grue (CCS).

17. Grue (1) pour conteneurs ayant un système d'acquisition et/ou d'analyse d'images suivant les revendications 14, 15 ou 16,
**caractérisée par le fait que**
le système de commande d'appareil photographique (CCR) est agencé pour émettre un code d'erreur de mesure, défini par une série d'erreurs différentes, au système de commande de grue (CCS).

18. Grue (1) pour conteneurs ayant un système d'acquisition et/ou d'analyse d'images suivant n'importe laquelle des revendications précédentes,
**caractérisée par le fait que**
au moins un appareil photographique (13), parmi les appareils photographiques, est agencé pour acquérir des images du conteneur (5) complet, afin de déterminer la présence d'endommagements extérieurs éventuels du conteneur.

19. Grue (1) pour conteneurs ayant un système d'acquisition et/ou d'analyse d'images suivant l'une quelconque des revendications précédentes,
**caractérisée par le fait que**
le système de commande d'appareil photographique (CCR) est agencé pour déterminer la position appropriée de zoom de chaque appareil photographique (13) activé, à partir d'informations sur la position du cadre (8) de préhension émises par le système de commande de grue (CCS) lorsqu'une commande d'oscillation est utilisée en tant que partie de l'automatisme de grue CCS (25).

20. Grue (1) pour conteneurs ayant un système d'acquisition et/ou d'analyse d'images suivant la revendication 12,
**caractérisée par le fait que**
**le fait que** le système de commande d'appareil photographique (CCR) est agencé pour créer automatiquement une compensation d'allongement/d'étirage de câble métallique en appliquant une valeur de correction, qui réétalonne la valeur de hauteur du conteneur, qui fait débuter le lancement et/ou l'arrêt de l'acquisition d'images.

21. Grue (1) pour conteneurs ayant un système d'acquisition et/ou d'analyse d'images suivant la revendication 12,
**caractérisée par le fait que**
le système de commande d'appareil photographique (CCR) est agencé pour créer automatiquement une correction si un axe de l'objectif d'appareil photographique (13) n'est pas sensiblement parallèle au niveau (14) des appareils photographiques et qui réétalonne la valeur de hauteur du conteneur, qui fait débuter le lancement et l'arrêt de l'acquisition d'images.

22. Procédé pour identifier et suivre un conteneur manipulé par une grue (1) pour conteneurs dans un terminal de conteneur, utilisant une grue (1) de conteneur suivant l'une quelconque des revendications précédentes, comportant les étapes dans lesquelles :
- on sélectionne le ou les appareils photographiques (13) convenables lorsqu'un conteneur (5) est à proximité ou s'approche du niveau (14) des appareils photographiques,
- on règle la dimension correcte de l'image de l'appareil photographique (13) en modifiant la valeur du zoom,
- on acquiert une ou plusieurs images du conteneur (5) et/ou de sa zone (18) de marquage d'identification (ID),
- on analyse les images acquises pour identifier le numéro d'identification (ID) du conteneur (5), et
- on enregistre/mémorise le numéro d'identification (ID) du conteneur (5) détecté.

23. Procédé pour identifier et suivre un conteneur manipulé par une grue (1) pour conteneurs dans un terminal de conteneur suivant la revendication 2, comportant les étapes dans lesquelles :
- on enregistre/mémorise l'instant et la position de déconnexion du conteneur (5) détecté du cadre (8) de préhension,
- on détecte l'achèvement du cycle de chargement-déchargement d'un bateau (6), en liant cette information à d'autres données ci-dessus, et en la transmettant à la logistique du terminal.

24. Programme informatique comportant des moyens formant codage de programme informatique pour effectuer les étapes d'un procédé suivant l'une quelconque des revendications 22 ou 23.
